Europäisches Patentamt

European Patent Office

Office européen des brevets

(11) Numéro de publication: **0 041 006**
**A2**

# (12) DEMANDE DE BREVET EUROPEEN

(21) Numéro de dépôt: **81400759.7**

(22) Date de dépôt: **13.05.81**

(51) Int. Cl.³: **A 22 C 11/12**

---

(30) Priorité: **27.05.80 FR 8011998**

(71) Demandeur: **Lelong, Jean-Claude, ATELIER AUTOMATISME ALBIGEOIS Plateau Saint-Antoine, F-81000 Albi (FR)**

(43) Date de publication de la demande: **02.12.81 Bulletin 81/48**

(72) Inventeur: **Lelong, Jean-Claude, ATELIER AUTOMATISME ALBIGEOIS Plateau Saint-Antoine, F-81000 Albi (FR)**

(74) Mandataire: **Lerner, François, 5, rue Jules Lefebvre, F-75009 Paris (FR)**

(84) Etats contractants désignés: **AT BE CH DE IT LI**

(54) Tête de nouage d'un lien sur un emballage et machine comportant une telle tête de nouage.

㊼ L'invention concerne une tête de nouage d'un lien L sur un emballage ainsi qu'une machine comportant cette tête de nouage. La tête de nouage comprend deux postes supérieur P1 et inférieur P2 destinés:

— dans un premier temps, à entourer un emballage en le poussant contre une longueur de lien L dressée verticalement entre les deux guide-fils des postes supérieur P1 et inférieur P2 d'une tête de nouage, agencés sur deux plateaux 3 et 4 d'une machine M,

— dans une deuxième temps, à amener les deux V constituant le guide-fil du poste P2 à une position plus haute que celle de l'œillet 7 constituant le guide-fil du poste P1,

— dans un troisième temps, à faire subir à l'œillet 7 une ou plusieurs rotations autour d'un axe vertical,

— dans un quatrième temps, à prendre et à bloquer dans un organe de préhension 11 l'extrémité de lien engagée,

— dans un cinquième temps, à dégager cet organe 11 des spires de lien L dessinées autour de lui par l'autre extrémité de lien L, sous l'effet des rotations décrites par l'œillet 7,

— et dans un sixième temps et dernier temps, à appliquer des forces de sens opposés sur les deux extrémités du lien L, afin de serrer le nœud ainsi réalisé.

L'invention qui concerne également une machine utilisant une telle tête de nouage s'applique notamment au nouage de lien sur des produits de charcuterie comme le saucisson.

# TETE DE NOUAGE D'UN LIEN SUR UN EMBALLAGE, ET MACHINE COMPORTANT UNE TETE DE NOUAGE

La présente invention concerne un procédé et une tête de nouage d'un lien sur un emballage et notamment sur un produit de charcuterie tel qu'un saucisson. L'invention concerne également une machine comportant une telle tête de nouage.

De nombreuses machines ont déjà été proposées pour réaliser des opérations similaires.

Les plus connues utilisent un procédé de nouage qui consiste à faire décrire au lien une courbe autour d'un emballage, identique à celle du noeud désiré, en insufflant de l'air comprimé à l'intérieur d'un circuit tubulaire, encerclant l'emballage à nouer et dans lequel circule ledit lien. Un tel procédé impose de nombreuses contraintes à savoir la condeption de la machine et plus précisément celle du circuit tubulaire en fonction des dimensions de l'emballage à nouer.

Afin de remédier à ces inconvénients, il a été proposé récemment une nouvelle méthode de nouage qui consiste, après avoir entouré le lien autour d'un emballage, à créer à une extrémité du lien et ce, dans l'espace, une ou plusieurs spires et à introduire axialement à l'intérieur de ces dernières l'autre extrémité du lien. Le noeud est alors formé et il suffit d'exercer des tractions de sens opposés sur chacune des extrémités du lien pour obtenir son serrage.

la demande de brevet français n°78.07254 propose un procédé et une machine permettant de réaliser un tel noeud. Le procédé qui est décrit consiste :

- à introduire le lien à nouer à l'intérieur d'un tire-bouchon creux et à le faire sortir de ce dernier ;

- à le pincer à une certaine distance de l'extrémité du tire-bouchon et à le faire repasser à l'intérieur des spires de ce dernier en le maintenant pincé, de telle sorte qu'au moins un brin de lien passe axialement dans lesdites spires ;

- à faire tourner le tire-bouchon en le reculant de façon à dégager des spires de lien autour du brin précité ;

- et enfin, à exercer des tractions de sens opposés sur les deux bouts du lien engagés, l'un dans le tire-bouchon et l'autre pincé à l'extérieur du tire-bouchon afin de serrer le noeud ainsi formé.

Ce procédé, bien qu'efficace puisque la composition du noeud est indépendante de la forme de l'emballage, est cependant difficile à mettre en oeuvre. En effet, la machine proposée comporte notamment un dispositif de soufflage d'air comprimé pour faire circuler le lien à l'intérieur du tire-bouchon creux.

La présente invention a pour objet un procédé permettant de réaliser plus facilement et de manière différente un noeud de même nature. Ce procédé est remarquable par le fait qu'il consiste :

- dans un premier temps, à entourer un emballage en le poussant contre une longueur de lien dressée, de préférence verticalement, entre deux guide-fils inférieur et supérieur ;

- dans un deuxième temps, à amener le guide-fil inférieur à une position plus haute que celle du guide-fil supérieur, pour croiser les extrémités du lien encerclant l'emballage ;

- dans un troisième temps, à faire subir au guide-fil supérieur une ou plusieurs rotations autour d'un axe vertical passant par le guide-fil inférieur ;

- dans un quatrième temps, à prendre et à bloquer dans ce dernier l'extrémité du lien engagée ;

- dans un cinquième temps, à dégager le guide-fil inférieur et plus particulièrement l'organe de préhension du lien, des spires qui ont été dessinées autour de lui par l'autre extrémité du lien, sous l'effet des rotations décrites par le guide-fil supérieur ;

- et dans un sixième temps, à appliquer des forces de sens opposées sur les deux extrémités du lien, afin de serrer le noeud ainsi réalisé.

Ce procédé présente de nombreux avantages et parmi ceux-ci celui de choisir le nombre de spires du noeud en faisant varier le nombre de rotations du guide-fil supérieur, et celui d'assurer la manutention et la suspension des emballages puisque le noeud réalisé décrit une boucle.

La présente invention a également pour objet une tête de nouage destinée à mettre en oeuvre ce procédé. Cette tête comprend deux postes inférieur et supérieur, entre lesquels est maintenu le lien à nouer au moyen de deux guide-fils portés par les deux embouts desdits postes, en regard l'un de l'autre.

Selon une première réalisation de l'invention, le premier poste est animé d'un mouvement de translation le long d'un axe vertical passant par les deux postes alors que le deuxième est animé d'un mouvement de rotation autour dudit axe.

Selon une deuxième réalisation de l'invention, les deux postes sont animés d'un mouvement de translation, orientés en sens inverse le long dudit axe vertical et le deuxième poste est animé d'un mouvement de rotation autour du même axe.

Dans ces deux modes de réalisation d'une tête de nouage, les mouvements de translation sont destinés à éloigner ou à rapprocher les deux postes l'un vers l'autre notamment pour amener le guide-fil du poste inférieur à une position plus haute que celle du guide-fil du poste supérieur, et le mouvement de rotation du poste supérieur est destiné à entrainer son guide-fil dans un mouvement identique, notamment pour créer les spires du noeud.

Le demandeur a également imaginé une machine comportant au moins une tête de nouage et permettant de nouer en continu des liens sur des produits de charcuterie ou sur tout autre emballage similaire. Cette machine comprend d'une part, un premier plateau horizontal sur lequel est agencé le poste supérieur de la tête de nouage et d'autre part, un deuxième plateau horizontal mobile verticalement entre le premier plateau et le socle de la machine et sur lequel est agencé le poste inférieur de ladite tête.

Dans le cas où la tête de nouage est conçue selon le premier mode de réalisation, le premier plateau de la machine est fixe et il est soutenu par deux colonnes de guidage sur lesquelles est monté coulissant un chariot constituant le plateau mobile.

Dans le cas où la tête de nouage est conçue selon le deuxième mode de réalisation, les deux plateaux sont fixés sur les branches horizontales d'un pentographe déformable.

Les autres caractéristiques et les autres avantages de l'invention apparaîtront plus clairement à la lecture de la description détaillée qui suit de quelques exemples de réalisation concrète, choisis pour illustrer les concepts fondamentaux de l'invention mais nullement limitatifs de ses nombreuses variantes d'exécution et d'application.

Cette description se réfère aux dessins annexés sur lesquels :

La figure 1 est une vue en coupe d'une machine à nouer conforme à l'invention ;

Les figures 2, 3, 4, 5, 6 et 7 sont des vues en perspective de la tête de nouage montée sur cette machine et illustrant l'une après l'autre les différentes phases du procédé de l'invention.

La figure 8 est une vue en perspective d'un mode de réalisation différent d'un organe d'une tête de nouage, conforme à l'invention.

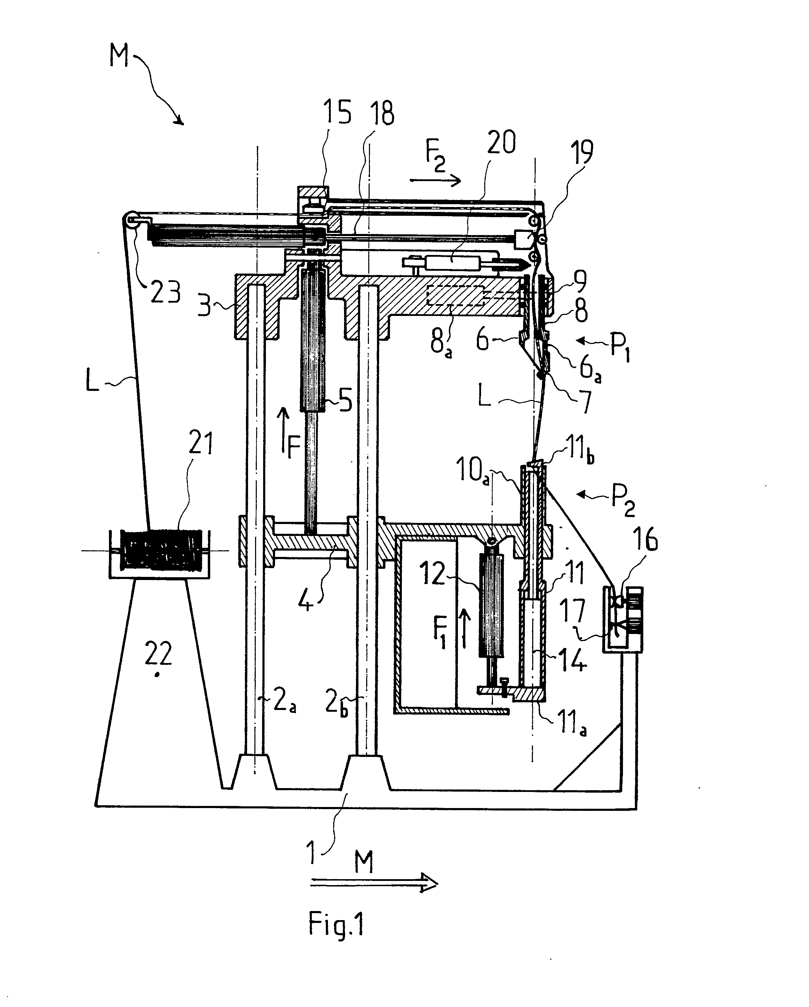

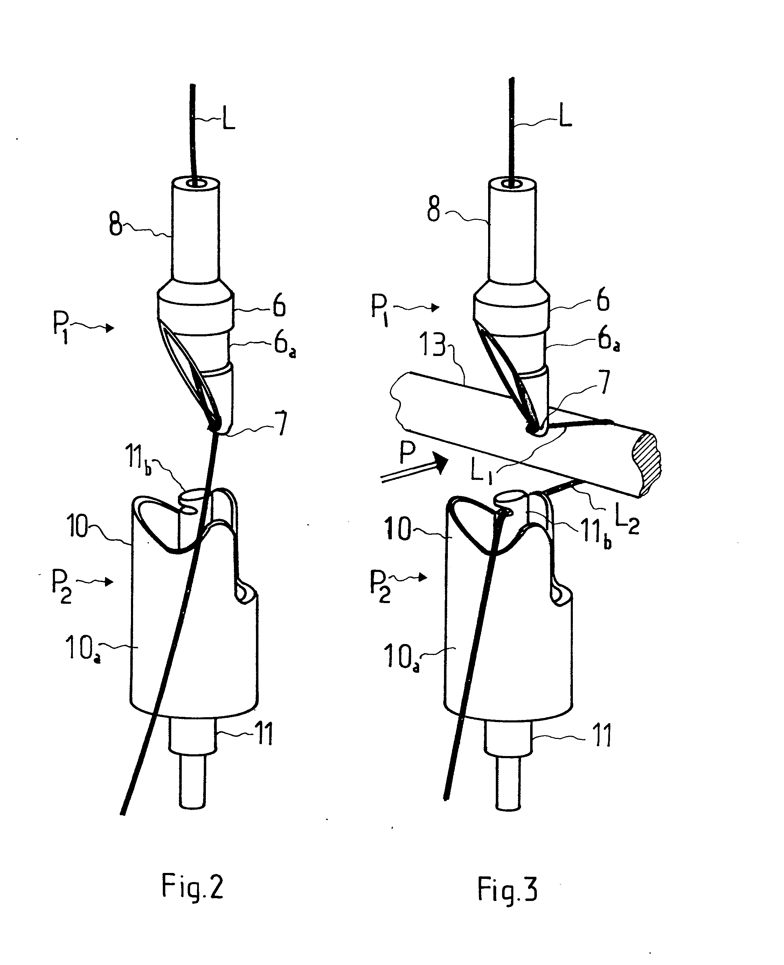

La machine M, représentée à la figure 1, est constituée d'un socle 1 sur lequel s'élèvent deux colonnes de guidage 2a et 2b soutenant un plateau fixe ou sommier 3. Sur ces deux colonnes 2a et 2b, un un plateau mobile 4 ou chariot est monté coulissant, comme le montre la flèche F, au moyen d'un vérin 5 calé entre les plateaux 3 et 4. Sur ces deux derniers sont agencés respectivement le poste supérieur P1 et le poste inférieur P2 d'une tête de nouage, représentée plus en détails aux figures 2 à 7

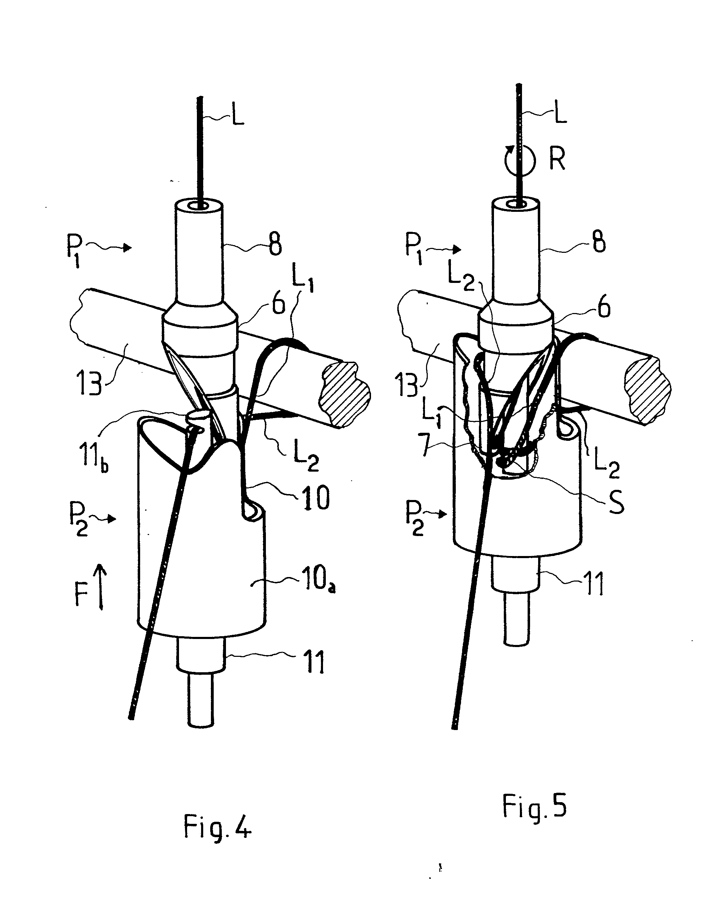

Le poste supérieur P1 se compose d'une partie basse d'une part, constituée par un embout cylindrique 6 dont l'extrémité inférieure porte un oeillet 7 servant de guide-fil distributeur pour le lien L défilant à l'intérieur, et d'une partie haute d'autre part, constituée par un arbre creux 8 qui est monté rotatif (flèche R, figure 5) au moyen d'un système roue dentée-crémaillère réglable 8a à l'intérieur d'une chape 9 installée sur l'extrémité du sommier 3. L'alésage de cet arbre 8 communique avec l'intérieur de l'embout 6 pour autoriser le passage du lien L et afin d'alimenter en continu le défilement de celui-ci dans l'oeillet 7.

Le poste inférieur P2, quant à lui, se compose également d'une partie haute d'une part, constituée par un embout cylindrique 10 dont la couronne dessine deux V, ouverts vers le haut et diamétralement opposés, afin de servir de guide-fil de positionnement du lien L engagé dans leur creux, et d'une partie basse d'autre part, constituée par le prolongement 10a de l'embout 10. Ce prolongement 10a est fixé sur le chariot 4 et fait office de fourreau à un organe mobile axialement 11 que nous appellerons ci-après canon. Ce canon 11 actionné selon la flèche F1 au moyen d'un vérin 12 calé entre son embase d'appui

11a et le chariot 4 tient lieu de support aux spires S de lien L qui sont formées autour de lui par la rotation R du poste P1 et assure la préhension et le blocage du lien L positionné dans les creux des deux V de l'embout 10.

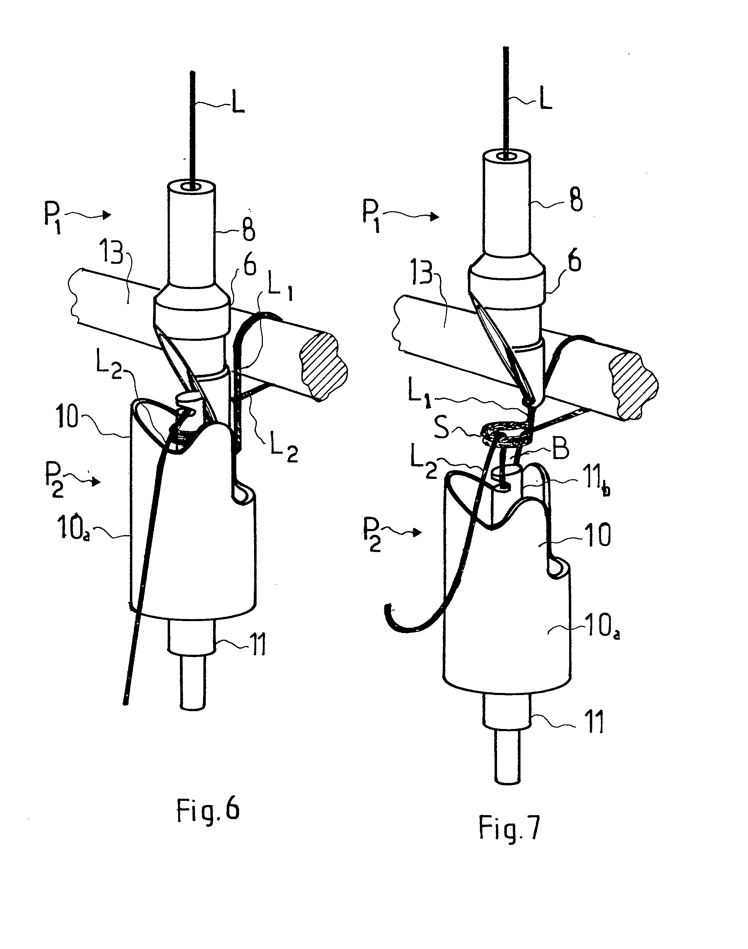

A cet effet, la partie haute 11b de ce canon est ouverte selon la forme d'un C dont les branches horizontales définissent deux mâchoires pour saisir le lien L venant s'engager à l'intérieur du C, lors de son retour sans les creux des deux V (cf. figure 6). La commande de fermeture de ces mâchoires est assurée au moyen d'un vérin 14 logé à l'intérieur du canon 11.

L'embout 6 du poste P1 est partiellement tronqué selon la forme d'un col de cygne pour permettre le passage du lien L logé dans le creux desdits V lors de la montée du poste P2, telle qu'illustrée sur le dessin de la figure 4.

De même l'embout 10 est tronqué selon un plan vertical afin de dégager une ouverture pour autoriser les passages croisés des deux extrémités L1 et L2 du lien entourant l'objet à lier 13.

On notera également que l'embout 6 comporte sur une partie de sa hauteur une gorge périphérique en retrait 6a pour limiter l'éjection vers l'extérieur de l'extrémité L2 du lien (cf. figure 5) lorsque le poste P1 est mis en rotation. En effet, lors de la rotation R de l'embout 6, l'extrémité L2 du lien se dispose autour de la gorge 6a et peut venir en butée contre le rebord supérieur de cette dernière sous l'effet de la force centrifuge empêchant de ce fait un éventuel débordement de cette extrémité à l'extérieur des deux V de l'embout 10.

En se reportant de nouveau à la figure 1, on remarquera que la machine M comporte deux pinces dont l'une 15, amenagée sur le sommier 3 avant le poste P1, est destinée à bloquer le lien L en ce point, et l'autre 16, amenagée sur le bâti de la machine M après le poste P2 est destinée à maintenir le lien L dans les creux des deux V de l'embout 10.

Une cisaille 17 est également amenagée sur le bâti de la machine pour couper le lien L en un point situé juste après la pince 16 ; cette dernière et la cisaille 17 sont commandées chacune par un vérin non représenté.

Selon une caractéristique particulièrement avantageuse de l'invention, la machine M est munie d'un tendeur 18 constitué d'un vérin dont le corps est fixé sur le sommier 3 au moyen d'attaches oscillantes pour réduire les contraintes d'efforts, et dont la tête se développant selon un mouvement symbolisé par la flèche F2, porte à son extrémité un élément passe-fil 19 dans lequel est guidé le lien L.

Ainsi, lorsque le lien L est bloqué dans la pince 15, l'élément passe-fil 19 sous l'effet de la rétraction de la tête du vérin 18, ramène en arrière le lien L guidé à l'intérieur, provoquant par cette action une traction sur ledit lien nécessaire au serrage d'un noeud venant d'être formé par les deux postes P1 et P2.

Dans le but de parfaire ce serrage, le demandeur a imaginé l'installation sur le sommier 3 d'un vibreur 20 dont l'action est appliquée sur la partie tendue du lien L, entre l'arbre creux 8 et le tendeur 18.

Selon une caractéristique de l'invention, le développement de la tête du vérin 18 correspond à une longueur égale à la moitié de la longueur de lien L comprise entre la pince 16 et un point situé au-dessus du noeud serré pour que, en relâchant le tendeur 18 (tel que représenté à la figure 1), le point précité vient automatiquement se loger dans la pince 16 sous l'effet du poids de l'objet 13 non retenu.

Nous remarquerons enfin que le lien L est alimenté en continu par une bobine 21 montée en libre rotation sur un support 22, solidaire du socle 1.

Avantageusement, le fonctionnement de la machine M est automatisé au moyen d'une centrale programmée qui commande, selon des instructions prédéterminées, la mise en service sélective de ses organes, suivant le cycle ci-après détaillé et correspondant au procédé de l'invention décrit au début du présent mémoire.

Avant de décrire le cycle, nous précisons que le lien L (cf. figures 1 et 2) guidé par une poulie de renvoi 23 portée par l'extrémité du corps du vérin 18, passe successivement entre les mâchoires relâchées de la pince 15, dans l'élément passe-fil 19, dans l'arbre creux 8 et dans l'oeillet 7 du poste P1, dans les creux des deux V du poste P2 et enfin, entre les mâchoires fermées de la pince 16.

Dans un premier temps (cf. figure 3), l'opérateur engage (flèche P) l'objet 13 à lier contre la longueur de lien L destinée à l'entourer, comprise entre les deux postes P1 et P2.

Dans un deuxième temps, (cf. figure 4), le vérin 5 est actionné pour déplacer le chariot 4 dans le sens de la flèche F

dans le but de croiser les deux extrémités L1 et L2 du lien entourant l'objet 13 et d'amener la ligne fictive joignant les creux des deux V du poste P2 à une position plus haute que celle de l'oeillet 7.

Dans un troisième temps (cf. figure 5), le système roue dentée-crémaillère 8a est actionné, mettant en rotation (flèche R) l'arbre 8 de sorte que l'oeillet 7 décrive autour du canon 11 des spires S.

Dans un quatrième temps (cf. figure 6), rotation du poste P1 est arrêtée de sorte que l'extrémité L2 redescende d'elle-même par glissement sur les pentes des deux V dans le creux de ces derniers, pour se loger à l'intérieur du C de l'extrémité du canon 11.

Dans un cinquième temps (cf. figure 7), la pince 15 se ferme pour bloquer le lien L, la pince 16 s'ouvre pour relâcher l'extrémité L2 du lien, la partie haute 11b emprisonne le lien engagé dans le C sous l'action du vérin 14 et enfin le vérin 12 est actionné dans le sens inverse de la flèche F1 provoquant le retrait du canon 11 dans son fourreau 10 pour le dégager des spires S. Le noeud est alors formé avec sa boucle de suspension B.

Dans un sixième temps, la tête du vérin 18 se rétracte dans le sens inverse de la flèche F2 et le vibreur 20 est mis en service pour serrer le noeud venant d'être formé.

Dans un septième temps, la pince 15 est désserrée pour autoriser la rétraction complète de la tête du vérin 18 et se referme ensuite.

Dans un huitième temps, la tête du vérin 18 se développe dans le sens de la flèche F2 pour reprendre sa position initiale de sorte qu'une partie de lien L située au-dessus du noeud vienne s'introduire à l'intérieur des mâchoires de la pince 16 et sous les lames de la cisaille 17 sous l'effet du poids de l'objet 13.

Dans un neuvième et dernier temps, la pince 16 se ferme, la cisaille 17 sectionne le lien L libérant ainsi l'objet 13 qui vient d'être noué, dans un bac de récupération prévu à cet effet, et les mâchoires de la pince 15 sont à nouveau desserrées.

La machine M est donc revenue à la position de départ telle que représentée aux figures 1 et 2 et elle est prête, selon le même cycle de fonctionnement, à nouer le lien L autour d'un autre objet 13.

Lorsque la machine M est utilisée pour nouer des liens sur des saucissons, elle peut être combinée, pour fonctionner automatiquement, avec le dispositif poussoir assurant leur remplissage en viande. A cet effet, le socle 1 de la machine M est monté mobile selon la flèche M, le long d'un axe perpendiculaire à l'axe de sortie du saucisson confectionné. Il sera judicieux dès lors de monter sur la machine deux têtes de nouage pour obtenir deux noeuds côte à côte sur le saucisson et à des intervalles réguliers, et de disposer en aval un dispositif de découpage réglé pour sectionner en continu le saucisson entre les deux noeuds disposés côte à côte.

Ainsi, au fur et à mesure de la sortie du saucisson de son dispositif poussoir, la machine M adoptant deux têtes de nouage, se déplace dans le sens de la flèche M, d'une part pour encercler du lien L le saucisson en deux points juxtaposés, et d'autre part, pour former deux noeuds ; elle revient ensuite à sa position de départ dans le sens inverse de la flèche M pendant une durée proportionnelle à la longueur de saucisson que l'on désire obtenir et, de nouveau évolue dans le sens de la flèche M pour former deux autres noeuds.

On comprend qu'il suffit de régler la fréquence des déplacements de la machine dans le sens de la flèche M pour déterminer les longueurs de saucisson désirées.

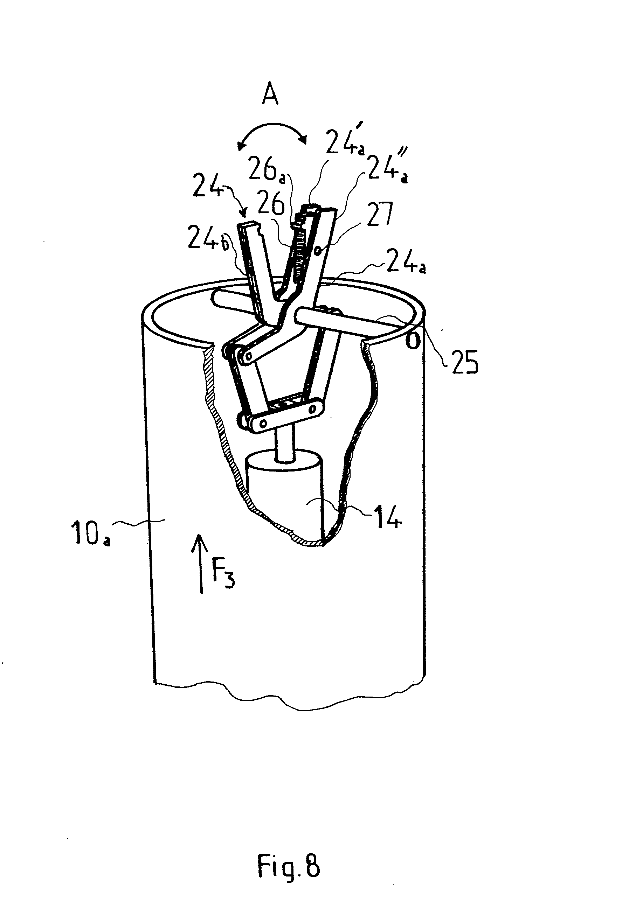

La figure 8 illustre un autre mode de réalisation du poste inférieur P2 et plus particulièrement d'un organe destiné à remplacer le canon 11 mobile à l'intérieur du fourreau 10a.

Comme on peut le voir, cet organe est constitué d'une pince 24 formée de deux branches 24a et 24b articulées (flèche A) autour d'un axe horizontal 25 porté par le fourreau 10a, et actionnées (flèche F3) par le vérin 14 installé à l'intérieur de ce dernier. Les extrémités hautes de ces branches forment deux mâchoires destinées, en position ouverte (telles que représentées) à servir de support aux spires S, et en position fermée, à servir de moyen de blocage de l'extrémité L2 du lien engagée entre elles.

Selon une caractéristique particulièrement avantageuse de l'invention, la mâchoire 24a est constituée de deux flasques 24'a et 24"a entre lesquelles une pièce plate 26, munie à son extrémité d'un ergot de retenue 26a, est montée pivotante en

0041006

son millieu autour d'un axe 27 supporté par les deux flasques 24'a et 24"a.

L'intérêt de cette pièce 26 qui s'.étend sur toute la longueur de la mâchoire 24a, est d'uniformiser le pincement sur toute la longueur des deux mâchoires 24a et 24b quels que soient l'usure de ces dernières et le jeu d'articulation autour de l'axe 25.

Cette pince 24 offre enfin l'avantage, par rapport au canon 11, d'éviter l'emploi du vérin 12 puisque le rapprochement l'une vers l'autre des mâchoires 24a et 24b lors du serrage de l'extrémité du lien L2 engagée entre elles, diminue le volume du support qu'elles constituent à l'intérieur des spires S, la dégageant ainsi de ces dernières.

L'invention qui vient d'être décrite plus haut, embrasse un vaste domaine d'applications industrielles et notamment comme il est dit au début du présent mémoire, elle peut être utilisée pour le nouage de liens autour de produits de charcuterie tels que les saucissons.

Pour une meilleure compréhension des revendications qui suivents et dont les termes délimitent l'étendue de l'invention ci-dessus divulgués, nous donnons ci-après un tableau récapitulatif des termes employés, accompagnés de leur référence numérique correspondante.

0041006

B    Boucle de lien

L    Lien

M    Machine

P1    Poste supérieur de la tête de nouage

P2    Poste inférieur de la tête de nouage

1    Socle de la machine M

2a et 2b  Colonnes de guidage

3    Sommier (plateau fixe)

4    Chariot (plateau mobile)

5    Vérin calé entre les plateaux 3 et 4

6    Embout cylindrique

7    Oeillet (guide-fil supérieur)

8    Arbre creux

8a    Système roue dentée-crémaillère entraînant l'arbre 8

9    Chape de l'arbre 8

10    Embout cylindrique

10a    Fourreau

11    Canon mobile dans le fourreau 10a

11a    Embase d'appui du canon 11

11b    Extrémité haute du canon 11

12    Vérin actionnant le canon 11

13    Emballage ou objet à nouer

14    Vérin actionnant la fermeture de l'extrémité 11b du canon 11

15    Pince

16    Pince

17    Cisaille

18    Tendeur

19    Passe-fil du tendeur 18

20    Vibreur

21    Bobine de lien

22    Support de la bobine 21

23    Poulie de renvoi du lien L

24    Pince

24a et 24b    Mâchoires de la pince 24

24'a et 24"a    Flasques de la mâchoire 24a

25    Axe de pivotement de la pince 24

26    Pièce plate

26a    Ergot de retenue dessiné sur la pièce 26

27    Axe de pivotement de la pièce 26.

REVENDICATIONS

1. Tête de nouage d'un lien sur un emballage selon un procédé de nouage qui consiste :

- dans un premier temps, à entourer ledit emballage en le poussant contre une longueur de lien dressée, de préférence verticalement, entre deux guide-fils inférieur et supérieur,

- dans un deuxième temps, à amener le guide-fil inférieur à une position plus haute que celle du guide-fil supérieur, pour croiser les extrémités du lien encerclant l'emballage,

- dans un troisième temps, à faire subir au guide-fil supérieur une ou plusieurs rotations autour d'un axe vertical passant par le guide-fil inférieur,

- dans un quatrième temps, à prendre et à bloquer dans ce dernier l'extrémité du lien engagée.

- dans un cinquième temps, à dégager le guide-fil inférieur et plus particulièrement l'organe de préhension du lien, des spires qui ont été dessinées autour de lui par l'autre extrémité du lien sous l'effet des rotations décrites par le guide-fil supérieur,

- et dans un sixième temps, à appliquer des forces de sens opposés sur les deux extrémités du lien, afin de serrer le noeud ainsi réalisé, ladite tête de nouage étant CARACTERISEE PAR LE FAIT QU'elle comprend deux postes inférieur et supérieur, entre lesquels est maintenu le lien à nouer au moyen de deux guide-fils portés par les deux embouts desdits postes, en regard l'un de l'autre : le premier poste est animé d'un mouvement de translation le long d'un axe vertical passant par les deux postes alors que le deuxième poste est animé d'un mouvement de rotation autour dudit axe.

2. Tête de nouage selon la revendication 1, CARACTERISEE PAR LE FAIT QUE le poste supérieur est animé d'un mouvement de translation le long de l'axe du mouvement de translation du poste inférieur et orienté en sens inverse de celui-ci.

3. Tête de nouage selon la revendication 1, CARACTERISEE PAR LE FAIT QUE le poste supérieur se compose d'une partie basse d'une part, constituée par un embout cylindrique dont l'extrémité inférieure porte un oeillet servant de guide-fil distributeur pour le lien défilant à l'intérieur, et d'une partie haute d'autre part, constituée par un arbre creux monté rotatif et dont l'alésage communique avec l'intérieur dudit

2

0041006

embout pour autoriser le passage du lien et afin d'alimenter en continu le défilement de celui-ci dans l'oeillet.

4. Tête de nouage selon la revendication 1, CARACTERISEE PAR LE FAIT QUE le poste inférieur se compose d'une partie haute d'une part, constituée par un embout cylindrique dont la couronne dessine deux V, ouverts vers le haut et diamétralement opposés pour servir de guide-fil de positionnement du lien engagé dans leur creux, et d'une partie basse d'autre part, constituée par le prolongement de la partie haute qui est monté mobile le long d'un axe vertical et qui fait office de fourreau à un organe mobile axialement pouvant à la fois, assurer la préhension et le blocage du lien positionné dans les creux desdits V et tenir lieu de support aux spires formées par le poste supérieur.

5. Tête de nouage selon les revendications 3 et 4, CARACTERISEE PAR LE FAIT QUE le susdit embout cylindrique du poste supérieur est partiellement tronqué selon la forme d'un col de cygne pour permettre le passage du lien logé dans les creux desdits V du poste inférieur lors de la montée de ce dernier et comporte sur une partie de sa hauteur une gorge périphérique en retrait pour limiter l'éjection vers l'extérieur dudit lien lorsque le poste supérieur est en rotation.

6. Tête de nouage selon les revendications 3 et 4, CARACTERISEE PAR LE FAIT QUE le susdit embout cylindrique du poste inférieur est tronqué selon un plan vertical pour autoriser les passages croisés des deux extrémités du lien entourant l'emballage, lors de la montée dudit poste.

7. Tête de nouage selon la revendication 4, CARACTERISEE PAR LE FAIT QUE le susdit organe mobile - de préhension du lien et de support des spires - est constitué d'un canon cylindrique ouvert à sa partie haute selon la forme d'un C dont les branches horizontales définissent deux mâchoires pour saisir le lien venant s'engager à l'intérieur du C lors de son retour dans les creux desdits V après la formation desdites spires.

8. Tête de nouage selon la revendication 4, CARACTERISEE PAR LE FAIT QUE le susdit organe mobile - de préhension du lien et de support des spires - est constitué d'une pince formée de deux branches articulées autour d'un axe horizontal et dont les extrémités forment deux mâchoires destinées, en position ouverte, à servir de support auxdites spires, et en position fermée à servir de moyen de blocage du lien engagé entre elles.

9. Tête de nouage selon la revendication 8, CARACTERISEE PAR LE FAIT QUE l'une des mâchoires de ladite pince est constituée de deux flasques entre lesquelles une pièce plate s'étendant sur toute la longueur de la mâchoire et munie à son extrémité d'un ergot de retenue, est montée pivotante en son milieu autour d'un axe supporté par lesdites flasques.

10. Machine permettant en continu de nouer des liens sur des produits de charcuterie ou sur tout autre emballage similaire et comportant au moins une tête de nouage selon l'une quelconque des revendications 1 à 9, CARACTERISEE PAR LE FAIT QU'elle comprend d'une part, un premier plateau horizontal sur lequel est agencé le poste supérieur de la tête de nouage et d'autre part, un deuxième plateau horizontal mobile verticalement entre le premier plateau et le socle de la machine et sur lequel est agencé le poste inférieur de ladite tête.

11. Machine selon la revendication 10, CARACTERISEE PAR LE FAIT QU'elle comporte deux pinces dont l'une, située avant le poste supérieur est destinée à bloquer le lien lors du serrage du noeud et l'autre, située après le poste inférieur est destinée à maintenir le lien dans le guide du poste inférieur avant la formation du noeud.

12. Machine selon la revendication 10, CARACTERISEE PAR LE FAIT QUE l'arbre creux du poste supérieur est monté dans une chape installée sur l'extrémité du premier plateau et est animé d'un mouvement de rotation réglable au moyen d'un système roue dentée-crémaillère.

13. Machine selon les revendications 10, 11 et 12, CARACTERISEE PAR LE FAIT QU'entre la pince de blocage du lien et le poste supérieur, sur une longueur de lien disposée dans le prolongement de l'axe de rotation de l'arbre creux de ce dernier, est aménagé un tendeur constitué d'un vérin dont le corps est fixé au moyen d'attaches oscillantes sur le premier plateau et dont la tête, mobile selon un axe perpendiculaire à l'axe de rotation dudit arbre creux, porte à son extrémité un élément passe-fil dans lequel est engagé le lien.

14. Machine selon les revendications 10, 11, 12 et 13, prises ensemble, CARACTERISEE PAR LE FAIT QU'elle comprend un vibreur aménagé sur la longueur de lien située entre le tendeur et l'arbre creux du poste supérieur.

15. Machine selon les revendications 10, 11, 12, 13 et 14, prises ensemble, CARACTERISEE PAR LE FAIT QU'elle comprend une cisaille destinée à couper le lien en un point situé après la pince maintenant le lien dans le guide du poste inférieur.

16. Machine selon les revendications 10 à 15 prises ensemble, CARACTERISEE PAR LE FAIT QUE le développement de la tête de vérin constituant le tendeur correspond à une longueur égale à la moitié de la longueur de lien comprise entre la pince située après le poste inférieur et un point situé au-dessus du noeud serré pour que, en relâchant le tendeur, ledit point vienne se loger à l'intérieur de ladite pince sous l'effet du poids de l'emballage.

17. Machine selon l'ensemble des revendications 10 à 16, CARACTERISEE PAR LE FAIT QUE le premier plateau est fixe et est soutenu par deux colonnes de guidage sur lesquelles est monté coulissant un chariot constituant le plateau mobile.

18. Machine selon l'ensemble des revendications 10 à 16, CARACTERISEE PAR LE FAIT QUE les deux plateaux sont fixés sur les branches horizontales d'un pentographe déformable.

19. Machine selon l'ensemble des revendications 10 à 19, et permettant de nouer des liens sur des saucissons ou similaires remplis en continu au moyen d'un dispositif poussoir, CARACTERISEE PAR LE FAIT QUE ladite machine comprend deux têtes de nouage et PAR LE FAIT QU'elle est montée mobile le long d'un axe perpendiculaire à l'axe de sortie du saucisson confectionné.

Fig.1

Fig.2

Fig.3

...

Fig.4

Fig.5

Fig.6

Fig.7

Fig.8